# EUROPEAN PATENT APPLICATION

(11) **EP 2 190 246 A1**
(43) Date of publication of application: **26.05.2010**
(21) Application number: 08020206.2
(22) Date of filing: 20.11.2008
(51) Int. Cl.: H04W 48/18

(54) **Method for location dependent downloading**

(71) Applicant: Koninklijke KPN N.V., 2516 CK The Hague (NL); Nederlandse Organisatie voor Toegepast- Natuurwetenschappelijk Onderzoek TNO, 2628 VK Delft (NL)
(72) Inventor: Broekhuijsen, Betram Jeroen, 9718 RT Groningen (NL); Laarakkers, Jeroen, 2631 WK Nootdorp (NL); Knobbe, Jan-Wiepke, 9745 DA Groningen (NL); Joosten, Hendrikus Johannes Maria, 9861 TJ Grootegast (NL)
(74) Representative: Wuyts, Koenraad Maria

(57) **Abstract**

A method for location dependent downloading of external operational data on a mobile phone is thus provided. The method comprises: determining a current geographic location; determining a geographic region comprising the current geographic location; verifying that the mobile phone does not comprise available operational data, which is arranged for controlling on the mobile phone access to a specific service linked to the geographic region; downloading from an external station, in dependency on the verifying, the external operational data for controlling on the mobile phone access to the specific service. The method is of particular advantage for downloading on a mobile phone subscription data local to a region.

## Description

### FIELD OF THE INVENTION

The invention relates to a method for downloading external operational data on a mobile phone.

The invention further relates to a corresponding computer program and mobile phone.

### BACKGROUND OF THE INVENTION

Mobile phones are increasingly capable of working with different types of communications networks.

In the art progress has been made towards arranging a mobile phone with support for two GSM networks. For example, UK Patent Application GB2436015 describes a mobile phone comprising a single Subscriber Identity Module card (SIM card), arranged with multiple subscriber identity sub-modules. The mobile phone further comprises a 'proprietary applications module' (PAM). The PAM can associate the mobile phone with one of the multiple subscriber identity sub-modules. When the mobile phone is associated with a particular one of the multiple subscriber identity sub-modules, the mobile phone can generate outgoing calls and receive incoming calls for a particular network corresponding to that particular subscriber identity sub-module. Each subscriber identity sub-module comprises a different IMSI number, which is associated in the network with a different telephone number. Before making a call, a user can use the PAM to associate the mobile phone with the subscriber identity sub-module of his/her choice, after which he/she can use the mobile phone via the communications network corresponding with the subscriber identity sub-module of his/her choice.

The PAM can be configured to associate the mobile phone with a first subscriber identity sub-module by default and to automatically change the association of the mobile phone to a second subscriber identity sub-module before the mobile phone makes a call. The effect of this is, that the user can be reached under a different telephone number than the number he/she uses for making outgoing calls.

Using the PAM a user may arrange it so that the calls he/she makes himself are routed via a local subscription, while he/she remains reachable using his/her regular subscription, in a roaming configuration.

### SUMMARY OF THE INVENTION

It is known that using a local GSM subscription, instead of a non-local subscription in a roaming configuration, can cut costs. However, to arrange a mobile phone with multiple non-local GSM subscriptions is not straightforward, and requires considerable fore-thought and/or investments from the user. For example, before going on a trip a user must have the fore-thought to arrange his/her mobile phone with a GSM subscription local to his/her destination. On the other hand, a user may arrange the mobile phone with multiple GSM subscriptions; say one for each European country. The latter solution may, however, be rather expensive.

It is an object of the invention to facilitate having multiple operational data sets, each operational data set being specific for some region, in order to make calls and/or receive calls in that region.

This and other objects are achieved by the method for downloading external operational data on a mobile phone. The method comprises: determining a current geographic location; determining a region comprising the current geographic location; verifying that the mobile phone does not comprise available operational data, which is arranged for controlling on the mobile phone access to a specific service linked to the region; downloading from an external station, in dependency on the verifying, the external operational data for controlling on the mobile phone access to the specific service.

The method determines a current geographic location. Based on the current location, it can be determined if the mobile phone already comprises operational data which is associated with a geographic region comprising the current location. In case the method determines that no such available operational data is available, the method is arranged to download external operational data from an external station. In this way, even though the user did not arrange his mobile to have to all the correct operational data at his mobile phone, for all the destinations he/she will or may visit, a mobile phone using the method according to the invention is therefore adapted to obtain the operational data needed. By downloading new external data when the mobile phone is in a new geographic region, the mobile phone can work with the new external data specific for the region, without the need of obtaining that data before entering the region. This facilitates the acquiring of external data. Moreover, using external data specific for a region often cuts costs.

In a practical embodiment, the external operational data comprises subscription data for gaining access to a communication network. The method comprises installing on the mobile phone the subscription data. In this way the mobile phone is arranged for using a new communication subscription. For example, the new communication subscription may be a GSM, an UMTS or an IMS subscription. In a practical embodiment, the subscription data comprises at least one of an authentication key and an International Mobile Subscriber Identity.

In a practical embodiment, the external operational data comprises geographic map information. The method comprises rendering a map on a display of the mobile phone based on the geographic map information.

Using this embodiment, the mobile phone can access a navigation system, without the need to arrange the mobile phone with all the necessary geographic map data before the itinerary commences. For example, Europe could be divided in multiple small regions. The mobile phone would need only a small number of these regions, in order to render local maps. This has the advantage that only a small amount of memory is needed to render local maps.

In a practical embodiment, the current location is obtained via a GSM base station, e.g., using the GSM protocol. This has the advantage that the current location is obtained in a cheap and easy manner, without the need for additional hardware. Note that the GSM base station need not necessarily be part of a GSM network for which the mobile phone has a subscription.

In a practical embodiment, the current location is obtained using a global positioning system. (GPS) This has the advantage that the current location is obtained with high precision. Moreover, using GPS has the advantage that the determination of the current location is independent of the mobile network. This can be advantageous when the method according to the invention is used to gain access to a local WiFi network. For example, a GPS receiver determines the current location of the mobile phone; the mobile phone searches in a database for a WiFi access point, i.e., hotspot, which is nearby; and the mobile phone obtains access information for the nearby access point. In another scenario, access information may be obtained in advance before it is actually needed. For example, using a current access point, which currently provides network access, further access information may be obtained for a further access point, the further access point currently being out of range yet so close that the further access information may be needed in the near future.

In a preferred embodiment, the method comprises determining if the current location is comprised in a further region, and, if so, allowing operational use of the external operational data. If the region that triggers the downloading of external operational data comprises a smaller further region, the downloading may start before the external operational data is needed. This has the advantage that for the user, the operation of the service continues without interruption.

In a preferred embodiment, further operational data is deleted, based on the current location. In addition to downloading external operational data, it is advantageous that available operational data that is no longer useful is deleted. It is preferred that the mobile phone signals the deletion to the external source, so that the operational data may be re-used on a different mobile phone.

The invention also relates to a method of providing a mobile phone with specific external operational data. The method comprises: receiving a request for the specific external operational data from the mobile phone, the specific external operational data being arranged for controlling on the mobile phone access to a specific service linked to a geographic region; selecting the specific external operational data from a pool of multiple external operational data; marking the specific external operational data as reserved for the mobile phone; and providing the mobile phone with the specific external operational data.

By selecting the specific external operational data from a pool, a limited number of external operational data sets can be used by many travelers' mobile phones. In case the multiple external operation data are multiple subscription data, then this further facilitates arranging mobile phones with multiple sets of operational data.
Reserving specific external operational data for a mobile phone may be done in a variety of ways. For example, the specific external operational data may be placed on a reservation list, or a flag associated with the specific external operational data may be set, etc.

Providing may be done by uploading using a data network, such as GPRS or the Internet. Typically the providing is done wirelessly.

In a preferred embodiment of the method of providing, the method comprises receiving a deletion signal from the mobile phone, indicating the specific external operational data has been functionally deleted on the mobile phone; unmarking the specific external operational as being reserved for the mobile phone.

Functionally deleting specific external operational data may be done by actually erasing the specific external operational data, but may also be done in a variety of other ways. For example, the specific external operational data may be marked as invalid, etc.

The computer program according to the invention comprises computer program code means, e.g., routines, instructions, software modules etc, adapted to perform a method according to the invention when the computer program is run on a computer. In a practical embodiment, the computer program is embodied on a computer readable medium.

For the computer readable medium, e.g., a memory, a magnetic storage device, a memory stick, etc, may be used.

The mobile phone according to the invention comprises localization means, a region identification means and a downloading means. The localization means is arranged to determine a current geographic location. The region identification means is arranged to determine that the mobile phone does not comprise available operational data arranged for controlling on the mobile phone access to a specific service linked to a specific region that comprises the current geographic location. The downloading means is arranged to download external operational data from an external station.

The external operational data arranges the mobile phone with access to the specific service.

A method for location dependent downloading of external operational data on a mobile phone is thus provided. The method is of particular advantage for downloading on a mobile phone subscription data local to a region.

### BRIEF DESCRIPTION OF THE DRAWINGS

The invention is explained in further detail by way of example and with reference to the accompanying drawings, wherein:
Figure 1 is a block diagram illustrating a communication system.
Figure 2 is a block diagram of a map, illustrating regions.
Figure 3 illustrates operational data.
Figure 4 is a flow chart illustrating a method according to the invention.

### List of Reference Numerals:

- 100: a communication system
- 110: a mobile phone
- 112: a current location determination means
- 114: a region identification means
- 116: a downloading means
- 118: a calling means
- 120: an external downloading station
- 130: an external communication network
- 132: a connection via a communication network
- 202: a first region
- 204: a second region
- 210: a first location
- 220: a second location
- 302: a first embodiment of operational operational data
- 304: a second embodiment of operational operational data
- 402: determining a current location
- 404: determining a region comprising the current location
- 406: verifying that the mobile phone does not comprise available operational data, which is arranged for controlling on the mobile phone access to a specific service linked to the region
- 408: downloading from an external station , in dependency on the verifying, the external operational data for controlling the specific service

Throughout the Figures, similar or corresponding features are indicated by same reference numerals.

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

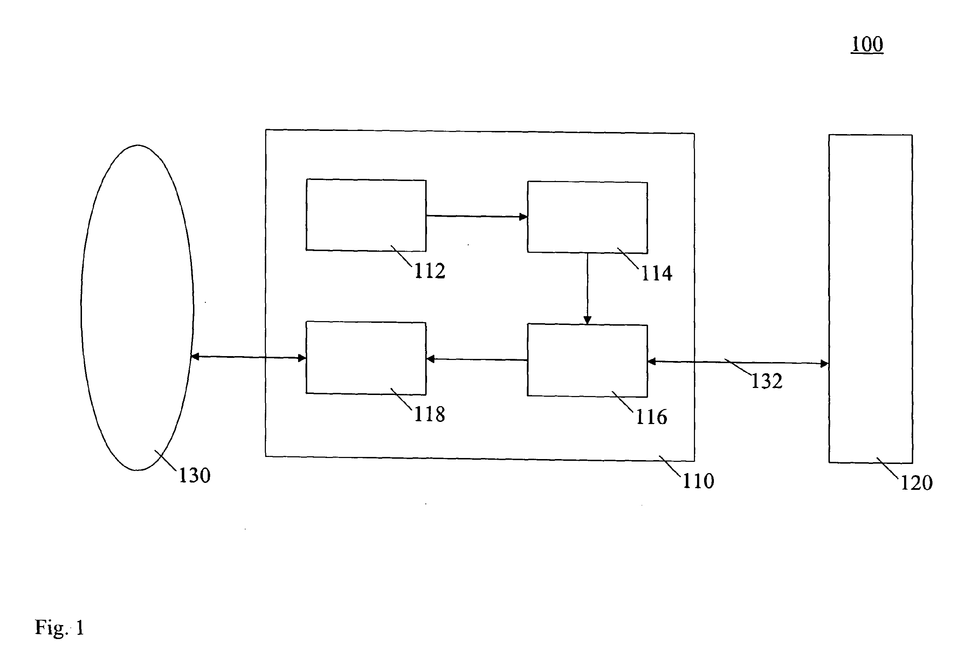

**Figure 1** illustrates, in the form of a block diagram a communication system 100. Communication system 100 comprises a mobile phone 110, an external downloading station 120 and an external communication network 130. External downloading station 120 manages operational data, which can be used by a mobile phone to gain access to external communication network 130.

Mobile phone 110 comprises a current location determination means 112, a region identification means 114, a downloading means 116 and a calling means 118. The components of mobile phone 110 may be implemented in dedicated hardware. Any one of them may, possibly in addition to the dedicated hardware, comprise a data processor, which executes software. To increase the clarity of the exposition below other components of mobile phone 110, such as a bus interconnecting the components, are not shown.

Current location determination means 112 is arranged to determine the current geographic location, i.e. the current geographic position, of mobile phone 110. For example, current location determination means 112 comprises a global positioning system (GPS) receiver or current location determination means 112 comprises a circuit that can obtain the current location from a GSM base station.

Current location determination means 112 is connected to region identification means 114. Region identification means 114 is arranged to find a region which comprises the current location. Typically, region identification means 114 comprises a database of regions and searches through the regions in the database in a sequential fashion. Alternatively, region identification means 114 may also use an online database, which it accesses through a wireless data connection, such as GPRS. Furthermore, once region identification means 114 has found a region which comprises the current location, region identification means 114 also verifies if the mobile phone 110 comprises subscription data, i.e., available operational data, for that region, such as local GSM subscription data.

Upon verifying that mobile phone 110 does not comprise available operational data for the region, region identification means 114 activates download means 116 through a connection between region identification means 114 and download means 116.

Downloading means 116 is arranged to download subscription data from external downloading station 120 via a connection 132 via a communication network.

Downloading means 116 may use General Packet Radio Service (GPRS), WiFi, or any other suitable download mechanism capable of downloading binary data. Connection 132 may use communication network 130 or another communication network (not shown). External downloading station 120 may be accessed through the Internet, using a fixed IP or URL address, which is stored on mobile phone 110.

Calling means 118 may use subscription data, which is operational data, to gain access to external communication network 130. External communication network 130 provides a service, the service is typically a communication service, and uses a protocol such as GSM, UMTS, GPRS, IMS, and LTE etc. To this end, calling means 118 comprises necessary equipment, such as an antenna, a tuner, etc, as is known in the art of connecting with an external communication network 130. The subscription data needed by calling means 118 comprises such data as an International Mobile Subscriber Identity (IMSI) number, an authentication key, an authentication algorithm etc.

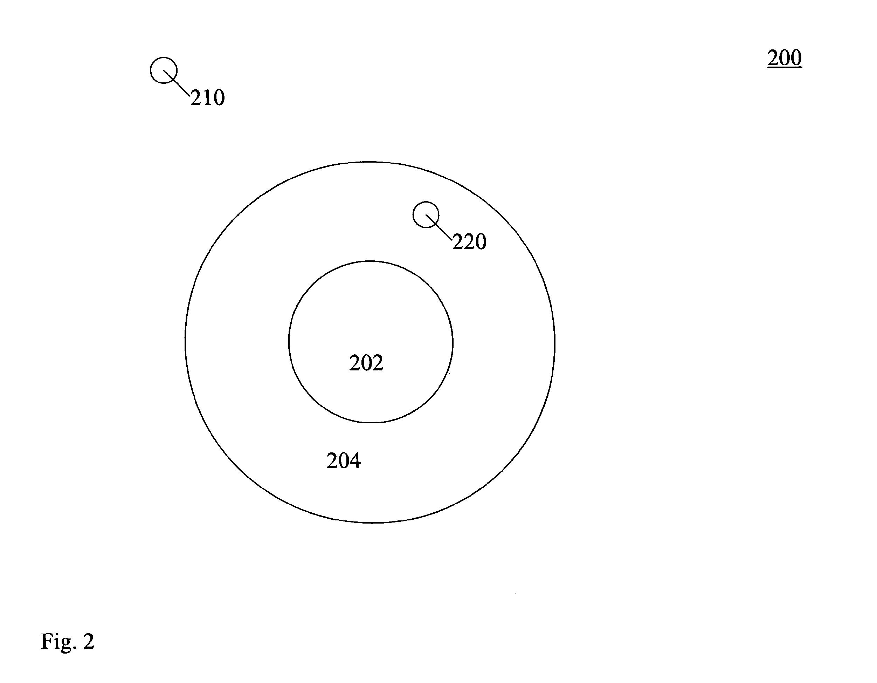

The workings of mobile phone 110 are further explained using a symbolic representation of a geographic map, which is shown in Figure 2.

**Figure 2** is a symbolic representation of a map. Figure 2 shows a first region 202 and a second region 204. Second region 204 comprises first region 202. Typically, first region 202 is a representation of a country, say Germany. Typically, second region 204 has the same general outline as first region 202, but is slightly larger, including a band around first region 202. For example, the band may be 10 kilometers wide. Figure 2 also shows a first location 210 and a second location 220. First location 210 is outside second region 204. Second location 220 is inside second region 204 but outside first region 202.

During operational use, current location determination means 112 obtains the current location. Assume for now, that the current location is first location 210. Although it may be the case that mobile phone 110 does not have subscription data linked to second region 204, since first location 210 is not comprised in second region 204, region identification means 114 will not trigger the downloading of subscription data from external downloading station 120 for second region 204.

If mobile phone 110 moves, the current location also changes. Assume now, that mobile phone 110 has moved to second location 220. At this point region identification means 114 finds second region 204, i.e., a further region, in a database of regions. Region identification means 114 then determines that the current location, i.e., second location 220, is comprised in second region 204. Region identification means 114 also determines that mobile phone 110 does not (yet) has local subscription data to control communication services linked to the second region 204. Upon determining so, region identification means 114 triggers downloading means 116 to download from external downloading station 120 new subscription data.

Downloading means 116 sends to external downloading station 120 a request for new subscription data, i.e., subscription data local to first region 202. The request comprises an indication of the desired region, i.e. first region 202 and/or an indication of the current location. External downloading station 120 comprises a pool of multiple subscription data which will all provide access to communication network 130. External downloading station 120 selects one from the pool and reserves it for the mobile phone, by marking the reserved subscription data in the pool with a representation of an identification of the user of the mobile phone. A representation of an identification of the user is typically a user identification number, used for billing purposes. Next the external downloading station 120 provides mobile phone 110 the reserved subscription data, e.g., by uploading it.

In this example, mobile phone 110 downloads subscription data for a region, i.e. region 202, in which mobile phone 110 does not yet reside. However, based on locality, it is expected that the subscription data may be needed in the future. The expectation in which region mobile phone 110 will reside in future, may also be based on other factors, such a logged data of previous use of mobile phone 110.

The new subscription data is installed on mobile phone 110 so that calling means 118 has access to the new subscription data. The new subscription data allows valid access to services, such as communication services, for use in region 202. Typically, the subscription data comprises an identification number, which must be send to communication network 130; or the subscription data comprises an authentication key to successfully engage calling means 118 in a cryptographic authentication protocol, e.g., a challenge response protocol, with network 130. The new subscription data may be stored in a memory (not shown) of mobile phone 110. The memory may be a removable memory, such as a Subscriber Identity Module card (SIM card) or a Universal Integrated Circuit Card (UICC). Typically, mobile phone 110 will in this fashion acquire operational data for multiple subscriptions. Mobile phone 110 may comprise an operating means (not shown) to select operational data which is local for the current location.

Typically, the user of mobile phone 110 will be notified of the new subscription although this is not necessary.

At this point in time, mobile phone 110 has new subscription data; however, region identification means 114 does not yet allow operational use of the new subscription data. Once, the current location is comprised in first region 202, as may also be determined by current location determination means 112 and region identification means 114, then region identification means 114 will unlock the new subscription data and allow its operational use.

The invention thus has the effect that upon approaching a new country, mobile phone 110 downloads and installs new subscription data before actually entering the new country. Once mobile phone 110 enters the new country the new subscription is available for use. Note the ease for the user with which his/her mobile phone 110 has obtained the new subscription data, i.e., without user-intervention.

Assume now, that the user of mobile phone 110 wishes to make an outgoing call. Calling means 118 then switches to the new subscription data, for example, by performing the necessary authentication procedure with external communication network 130. Calling means 118 then sets up the connection using the new subscription data.

It may be so arranged that mobile phone 110 can still be reached using a global subscription. To this end, mobile phone 110 also authenticates to external communication network 130, or a further communication network (not shown), using previously obtained subscription data. The previously obtained subscription data would typically be used in a roaming configuration. The operating means (not shown) configures mobile phone 110 for default operational data, i.e., the previously obtained subscription data, and switches to the new subscription data before making a phone call. This has the effect that mobile phone 110 uses for outgoing connections an IMSI number, and hence a corresponding telephone number, that changes, in dependency on the region from which mobile phone 110 is calling, but the number under which mobile phone 110 can be reached remains the same.

When mobile phone 110 leaves first region 202, for example, when localization means 114 determines that the mobile phone is again at first location 210, the subscription data which was downloaded for first region 202 can be deleted again. Typically, mobile phone 110 will send a signal to external station 120 to notify it of the deletion. This allows external station 120 to return the subscription data to its pool of a limited number of local subscriptions to be used again later by one of a larger number of travelers' mobile phones, by removing the marking in the pool.

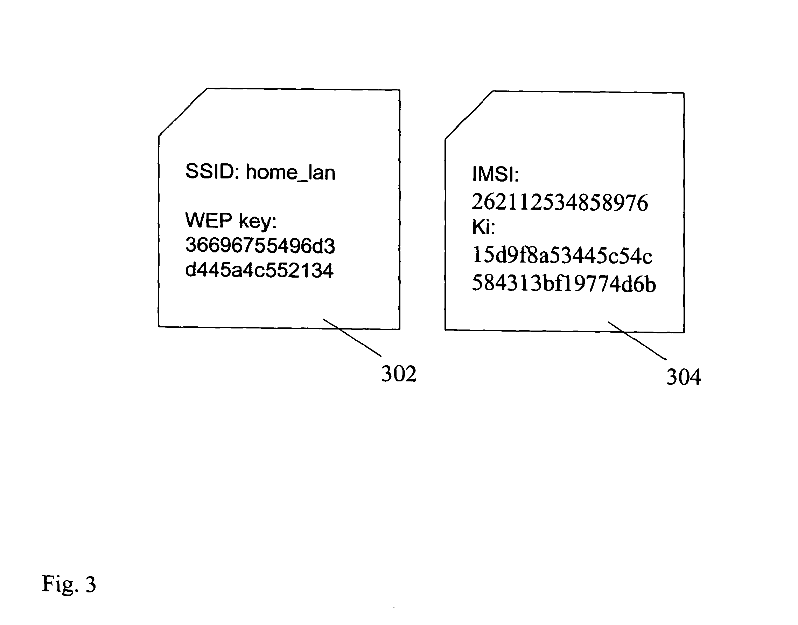

**Figure 3** illustrates a first embodiment of operational data 302 and a second embodiment of operational data 304, which may be used by calling means 118.

First embodiment of operational data 302 gives information needed to connect to a WiFi communication network, i.e. to a WiFi hotspot. This WiFi hotspot has a Service Set Identifier (SSID): 'home_lan'. This hotspot is protected using Wired Equivalency Privacy (WEP). The WEP key is: 36696755496d3d445a4c552134. Calling means 118 may use this information to connect to this particular WiFi hotspot in a manner known in the art.

A problem with WiFi communication networks is that they typically provide only a limited geographic region with WiFi communication services. Using the invention, mobile phone 110, can obtain access information, i.e. operational data, for nearby WiFi communication networks before the mobile phone enters those nearby WiFi communication networks. This solves the problem of the local nature of WiFi communication networks in a transparent fashion, as the mobile phone 110 is able to switch from one WiFi communication network to another WiFi communication network, in a manner which need not be noticeable by the user of mobile phone 110.

Second embodiment of operational data 304 gives information needed to connect to a GSM communication network. First the International Mobile Subscriber Identity (IMSI) is given: 262112534858976. Next, the authentication key is given (Ki): 15d9f8a53445c54c584313bf19774d6b.

Note that additional information may be necessary to connect to a particular network.

The invention may also be used to obtain other operational data which is linked to a specific region. For example, the mobile phone may download map rendering data, upon entering a new region. The map rendering data enables the rendering of maps and allows navigation services to be provided.

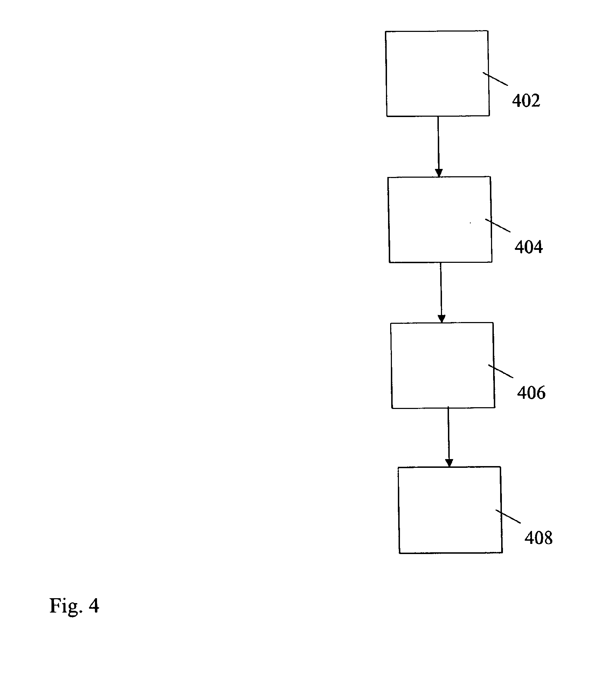

**Figure 4** gives a flowchart illustrating a method according to the invention. Figure 4 comprise a step 402: determining a current location; a step 404: determining a region comprising the current location; a step 406: verifying that the mobile phone does not comprise available operational data, which is arranged for controlling on the mobile phone access to a specific service linked to the region; and a step 408: downloading from an external station, in dependency on the verifying, the external operational data for controlling the specific service.

The order of the steps of a method according to the invention may be varied, and other steps may be interposed. Typically, the method will be embodied in computer program code, e.g., using a language such as C, assembly or microcode. The program code can be executed in a processor, e.g., comprised in mobile phone 110. The program code can be stored in any suitable computer readable medium, such as a memory, a magnetic storage, etc. The program code may also be transmitted as a signal, e.g., over the Internet. The method may also be executed using dedicated hardware. For example, the method may be embodied in hardware, which is tightly coupled and/or integrated with any one of current location determination means 112, region identification means 114, downloading means 116 and calling means 118.

## Claims

1. A method for downloading external operational data on a mobile phone, comprising:
determining a current geographic location;
determining a geographic region comprising the current geographic location;
verifying that the mobile phone does not comprise available operational data, which is arranged for controlling on the mobile phone access to a specific service linked to the geographic region;
downloading from an external station, in dependency on the verifying, the external operational data for controlling on the mobile phone access to the specific service.

2. A method as in claim 1, wherein the external operational data comprises subscription data for gaining access to a communication network, the method comprises installing the subscription data on the mobile phone.

3. A method as in claim 2, wherein the subscription data comprises at least one of: an authentication key, an International Mobile Subscriber Identity.

4. A method as in claim 1, wherein the external operational data comprises geographical map information, the method comprising rendering a map on a display of the mobile phone, based on the geographic map information.

5. A method as in claim 1, wherein the current geographic location is obtained using a global positioning system.

6. A method as in any one of the preceding claims, comprising determining if the current geographic location is comprised in a further geographic region, and, if so, allowing operational use of the external operational data.

7. A method as in any one of the preceding claims, wherein further operational data is deleted, based on the current geographic location.

8. A method of providing a mobile phone with specific external operational data, comprising:
receiving a request for the specific external operational data from the mobile phone, the specific external operational data being arranged for controlling on the mobile phone access to a specific service linked to a geographic region;
selecting the specific external operational data from a pool of multiple external operational data;
marking the specific external operational data as reserved for the mobile phone; and
providing the mobile phone with the specific external operational data.

9. A method as in Claim 8 comprising:
receiving a deletion signal from the mobile phone, indicating the specific external operational data has been functionally deleted on the mobile phone;
unmarking the specific external operational as being reserved for the mobile phone.

10. A computer program comprising computer program code means adapted to perform all the steps of any one of the preceding claims when the computer program is run on a computer.

11. A computer program as claimed in claim 10 embodied on a computer readable medium.

12. A mobile phone comprising: localization means, a geographic region identification means; and a downloading means; wherein: the localization means is arranged to determine a current geographic location; the geographic region identification means is arranged to determine that the mobile phone does not comprise available operational data arranged for controlling on the mobile phone access to a specific service linked to a specific geographic region that comprises the current geographic location, the downloading means is arranged to download external operational data from an external station.
